# EUROPEAN PATENT SPECIFICATION

(11) **EP 2 443 885 B1**
(45) Date of publication and mention of the grant of the patent: **26.09.2018**
(21) Application number: 10735333.6
(22) Date of filing: 16.06.2010
(51) Int. Cl.: H04W 76/19

(54) **METHODS AND NODES FOR SETTING UP MULTIPLE PACKET DATA CONNECTIONS OF A USER EQUIPMENT TOWARD AN ACCESS POINT**
VERFAHREN UND KNOTEN ZUR EINRICHTUNG MEHRERER PAKETDATENVERBINDUNGEN EINES BENUTZERGERÄTS ZU EINEM ZUGANGSPUNKT
PROCÉDÉS ET NOEUDS POUR ÉTABLIR DE MULTIPLES CONNEXIONS DE DONNÉES PAR PAQUETS D'UN ÉQUIPEMENT UTILISATEUR AUPRÈS D'UN POINT D'ACCÈS

(30) Priority: 19.06.2009 US 218640 P; 24.02.2010 US 711434
(43) Date of publication of application: 25.04.2012
(73) Proprietor: Telefonaktiebolaget LM Ericsson (publ), 164 83 Stockholm (SE)
(72) Inventor: QIANG, Zu, Kirkland Québec H9H 4R4 (CA)
(74) Representative: Röthinger, Rainer
(86) International application number: PCT/IB2010/052708
(87) International publication number: WO 2010/146548

(56) References cited:
- WO-A2-2009/007870
- "3rd Generation Partnership Project; Technical Specification Group Services and System Aspects; Architecture enhancements for non-3GPP accesses (Release 9)" 3GPP STANDARD; 3GPP TS 23.402, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.0.0, 1 March 2009 (2009-03-01), pages 1-191, XP050363664
- 3GPP: "Third Generation Partnership Project Draft MEETING REPORT v1.0.0" 3GPP DRAFT; DRAFT_CT439BIS_MEETING_REPORT_V100, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Budapest; 20080817, 17 August 2008 (2008-08-17), XP050314416 [retrieved on 2008-08-17]
- "3rd Generation Partnership Project; Technical Specification Group Core Network and Terminals; Proxy Mobile IPv6 (PMIPv6) based Mobility and Tunnelling protocols; Stage 3 (Release 8)", 3GPP STANDARD; 3GPP TS 29.275, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.0.0, 1 September 2008 (2008-09-01), pages 1-49, XP050372760,
- ERICSSON: "Multiple PDN connections to one APN with PMIP-based interfaces", 3GPP DRAFT; S2-085579_DP_MPDN_SAME_APN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Sophia; 20080819, 19 August 2008 (2008-08-19), XP050267609, [retrieved on 2008-08-19]
- NOKIA SIEMENS NETWORKS ET AL: "Intersystem handover with multiple PDN connections to the same APN", 3GPP DRAFT; S2-094129_R3879_R3443(MUPSAP_HANDOVER)V4, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Tallinn; 20090514, 14 May 2009 (2009-05-14), XP050347076, [retrieved on 2009-05-14]

## Description

### Technical Field

The present invention relates generally to the field of communications and, more specifically, to methods and nodes for setting up multiple packet data connections of a user equipment toward an access point.

### Background

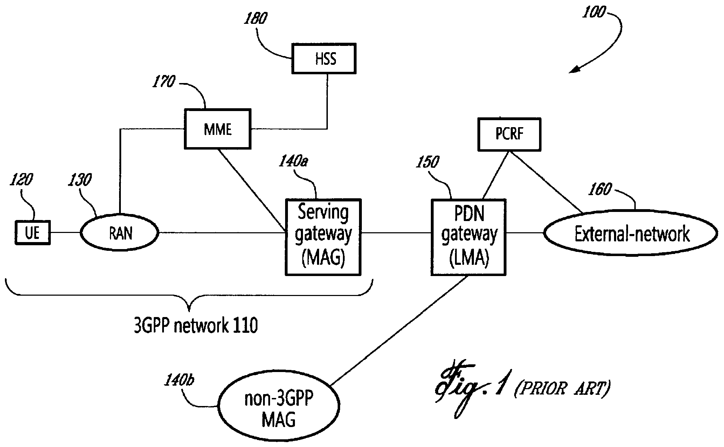

The 3^{rd} generation partnership project (3GPP) standard organization is currently working on its 8^{th} release of a long term evolution (LTE) and evolved packet core (EPC) architecture. In Release 8, the 3GPP has specified the use of proxy mobile IP (PMIP), specified in Request For Comments (RFC) 5213 of the Internet Engineering Task Force (IETF), as a protocol for mobility support. Figure 1 shows a prior art representation of a 3GPP LTE/EPC architecture. An architecture 100 supports 3GPP as well as non-3GPP system accesses. The architecture 100, which is simplified for ease of illustration in Figure 1, comprises a 3GPP access network 110 further comprising a user equipment (UE) 120, a radio access network (RAN) 130, a mobility management entity (MME) 170, a home subscriber server (HSS) 180, and a serving gateway (SGW) acting as a PMIP-capable mobility access gateway (MAG) 140a. The 3GPP access network 110 communicates toward external networks 160 through a packet data network gateway (PDN gateway, or PGW) acting as a PMIP-capable local mobility anchor (LMA) 150. The architecture 100 provides supports to non-3GPP accesses inasmuch as those accesses comprise a MAG 140b capable of communicating with the LMA 150.

When the UE 120 first attaches the 3GPP network 110, it specifies an access point (not shown) of the external network 160 to indicate to which external network 160 it wants to connect. This is done by use of an access point name (APN) sent by the UE 120 to the SGW, which acts as a MAG 140a for the UE 120. The APN may be used in the 3GPP network 110 to select a proper PGW, acting as a LMA 150 for the UE 120. The MAG 140a sends its own address along with an identity of the UE 120 and the APN to the LMA 150, in a proxy -binding update (PBU) message. The LMA 150 stores UE identity, the MAG address and APN in a binding cache entry (BCE) for the UE 120 and responds to the MAG 140a with a proxy -binding acknowledgement (PBA) message. The LMA 150 may provide connectivity toward several external networks 160 so the APN may also be used within the LMA 150 to connect to the proper external network 160. Data packets may start being exchanged between the UE 120 and the external network 160, through the LMA 150 and through the MAG 140a.

When the UE 120 makes a handoff, it can be changing from an old MAG to a new MAG. The new MAG sends a new PBU to the LMA 150, indicating that the new MAG is a new point of attachment for the UE 120. The LMA 150 updates its BCE with an address of the new MAG and redirects the exchange of data packets through the new MAG where the UE 120 is now attached. The LMA 150 answers to the new MAG by sending a new PBA.

It is possible for the UE 120 to make multiple connections to the same access point. For this purpose, after the UE 120 has activated a first connection, it may send an activation request for a new connection to the external network 160, using the same APN. A detailed explanation of this process may be found in Technical Specification (TS) 23.402 V9.0.0 as of 1 March 2009 published by the 3GPP. According to PMIP, the activation is handled by the MAG 140a, which sends a new PBU to the LMA 150 including the APN. The LMA 150 sets up a new connection to the indicated APN, which incidentally may be the same as the APN of the first connection. As every connection for the UE 120 is causing a new BCE in the LMA 150, the LMA 150 is capable of handling several connections to the same APN for a same UE 120. The LMA 150 returns a new PBA to the MAG 140a, which may inform the UE 120 of the successful connection.

A problem with multiple connections of the same UE 120 to the same APN arises when the UE 120 needs to make a handoff or when the UE 120 needs to release a connection. The LMA 120 may receive from the MAG 140a a binding revocation indication (BRI) message indicating that a connection is to be released. The LMA 120 may also receive a new PBU from a new MAG, indicating that a handoff is taking place. As there is more than one connection related to the same APN, the LMA 120 does not know which one of the multiple connections relates to the received BRI or PBU. Consequently, the LMA 120 does not know which connection should be handed over or released.

Document 3GPP TS 29.275 V8.0.0 may be construed to disclose a technique pertaining to stage 3 of the PMIPv6 Based Mobility and Tunnelling Protocols used over the PMIP-based S2a, S2b, S5, and S8 reference points defined in 3GPP TS 23.402, and are thus applicable to the Serving GW, PDN Gateway, ePDG, and Trusted Non-3GPP Access. Protocols specifications are compliant with relevant IETF RFCs.

Document "Multiple PDN connections to one APN with PMIP-based interfaces", Ericsson, 3GPP draft S2-085579 may be construed to disclose solutions and use cases for multiple PDN connections to one APN when using PMIP based interfaces. It is concluded that multiple PDN connections per APN are to be supported only for 3GPP accesses with GTP-based S5/S8 in rel-8. Further, the MME will only store one entry per APN and PDN GW identity pair in HSS, even if the UE has multiple PDN connections to one APN. At handover from 3GPP to non-3GPP access using S2a/S2b, the target non-3GPP access will thus only receive one copy of the APN and PDN GW identity pair. The EPC shall select one PDN connection for the handover, and terminate the remaining PDN connections for this APN. A simple solution for how the EPC selects PDN connection is desirable. The EPC can e.g. select the first (or last) PDN connection that was established for a given APN and IMSI. In order for the UE to control which PDN connection is being handed over, the UE can choose to close all PDN connections to a given APN (while still being active in 3GPP access) except the one to be handed over to non-3GPP access.

Document "Intersystem handover with multiple PON connections to the same APN", Nokia Siemens Networks et.al., 3GPP change request S2-094129 may be construed to disclose a technique pertaining to multiple PON connections to the same APN. Based on this, enhancement of the handover procedures between 3GPP and non-3GPP networks including optimized CDMA2000 handover procedures to support multiple PON connections to the same APN are proposed.

### Summary

The invention is set out in the appended claims. The embodiments and/or examples of the following description, which are not covered by the appended claims, are considered as not being part of the present invention. There would be clear advantages of having methods and nodes for setting up multiple packet data connections of a user equipment toward an access point. It is therefore a broad object of this invention to provide methods, a mobility access gateway (MAG) and a local mobility anchor (LMA) for optimally setting up connections between an access point and a user equipment (UE).

There are provided methods and apparatuses according to the independent claims. Developments are set forth in the respective dependent claims.

Preferably, there is a method of setting up, for a UE, multiple packet data connections toward an access point. Preferably, the method is implemented in a MAG. Preferably, the method involves providing at the MAG a first unique identifier of a first connection of the UE toward the access point. Preferably, the MAG sends toward a LMA a first proxy-binding update (PBU) message comprising a UE identity, an address of the MAG, the first unique identifier and an access point name (APN) of the access point. Preferably, the MAG then receives from the LMA a first proxy - binding acknowledgement (PBA) message comprising the first unique identifier.

Preferably, there is a method of setting up, for a UE, multiple packet data connections toward an access point having an APN. Preferably, the method is implemented in a LMA. Preferably, the method starts by receiving at the LMA, from a MAG, a first PBU comprising a UE identity, an address of the MAG, the APN and a first unique identifier of a first connection of the UE toward the access point. Preferably, the LMA stores the UE identity, the address of the MAG, the APN and the first unique identifier in a first binding cache entry (BCE) of the LMA. Preferably, the LMA then sends toward the MAG a first PBA comprising the first unique identifier.

Also presented is a MAG for setting up, for a UE, multiple packet data connections toward an access point having an APN. The MAG comprises an interface for communicating with a LMA, and a processor. The processor controls the interface. The processor also provides a first unique identifier of a first connection of the UE toward the access point. The processor requests the interface to send toward the LMA a first PBU comprising a UE identity, an address of the MAG, the first unique identifier and the APN. The processor then receives from the LMA, through the interface, a first PBA comprising the first unique identifier.

Further presented is a LMA for setting up, for a UE, multiple packet data connections toward an access point having an APN. The LMA comprises a memory for storing BCEs, an interface for communicating with one or more MAGs, and a processor. The processor controls the interface. The processor also receives from a MAG, through the interface, a first PBU comprising a UE identity, an address of the MAG, the APN and a first unique identifier of a first connection of the UE toward the access point. The processor stores the UE identity, the address of the MAG, the APN and the first unique identifier in a first BCE. The processor requests the interface to send toward the MAG a first PBA comprising the first unique identifier.

### Brief Description of the Drawings

For a more detailed understanding of the invention, for further objects and advantages thereof, reference can now be made to the following description, taken in conjunction with the accompanying drawings, in which:
Figure 1 is a prior art representation of a 3GPP LTE/EPC architecture;
Figure 2 shows an exemplary method implemented in a mobility access gateway, as per some teachings of the present invention;
Figure 3 shows an exemplary method implemented in a local mobility anchor, as per some teachings of the present invention;
Figures 4a and 4b show a sequence diagram depicting exemplary steps of the method of the present invention;
Figure 5 shows an exemplary mobility access gateway according to an aspect of the present invention; and
Figure 6 shows an exemplary local mobility anchor according to an aspect of the present invention.

### Detailed Description

The innovative teachings of the present invention will be described with particular reference to various exemplary uses and aspects of the preferred embodiment. However, it should be understood that this embodiment provides only a few examples of the many advantageous uses of the innovative teachings of the invention. In general, statements made in the specification of the present application do not necessarily limit any of the various claimed aspects of the present invention. Moreover, some statements may apply to some inventive features but not to others. In the description of the figures, like numerals represent like elements of the invention.

The present invention provides methods, a mobility access gateway (MAG) and a local mobility anchor (LMA) for setting up, for a user equipment (UE), multiple packet data connections toward an access point having an access point name (APN). When the UE establishes a connection, it selects the APN designating the access point of an external network from which it wants to obtain a service. The APN arrives at the MAG, for example from a radio access network (RAN) that provides connectivity to the UE. The MAG of the present invention assigns a unique identifier (UID) to the connection. The MAG then sends a proxy binding update (PBU) message to the LMA. The PBU carries an identity of the UE, an address of the MAG, the APN and the UID. The LMA creates a binding cache entry (BCE) for the UE connection and stores therein the UE identity, the MAG address, the APN and the UID. By knowing the APN, the LMA can establish a connection toward the access point selected by the UE. The LMA uses the MAG address to return a proxy binding acknowledgement (PBA) message to the MAG.

The UE may set up a plurality of connections. For each new connection, the MAG assigns a distinct UID and sends a separate PBU to the LMA, each separate PBU carrying the distinct UID along with the UE identity, the address of the MAG, and a selected APN. The LMA creates a distinct BCE for each connection. Even if the same APN is selected for more than one connection by the UE, no two BCEs are identical because, although they may refer to the same UE and include the same MAG address and APN, distinct BCEs comprise distinct UIDs.

The UE may move about and handoff its connection within the RAN. The UE may even disconnect from the RAN and reconnect to a different network type. As a result of the handoff, a new MAG may be called to support the connection of the UE. The original MAG sends the UID of the connection undergoing the handoff to the new MAG The new MAG sends a new PBU to the LMA in order to update a BCE corresponding to the connection being handed over, the new PBU comprising the UE identity, an address of the new MAG, the relevant APN, and the UID obtained from the original MAG. Because the new PBU comprises the proper UID, the LMA can without difficulty identify the proper BCE and update it with the address of the new MAG.

The UE may decide to release one or more, but not all, of its previously established connections. The MAG sends a binding revocation indication (BRI) message to the LMA. The BRI comprises the UE identity, the address of the MAG, the APN, and the UID(s) of the connection(s) being released. Because the BRI comprises the proper UID(s), the LMA can without difficulty identify and release the proper BCE(s).

In the context of the present invention, a UE may comprise a mobile cellular telephone, a mobile node, a digital personal assistant, a laptop computer, an IP television apparatus, an intelligent terminal, a gaming device, and the like. The UE identity may comprise a mobile station integrated service data network (MSISDN) number, an international mobile station identity (IMSI), or a network access identifier (NAI). The MAG may comprise a 3GPP serving gateway (SGW) or a non-3GPP node providing access to a UE, either directly, through a complete radio access network, or through a simple access point. The LMA may comprise a 3GPP packet data network gateway (PGW) connected toward one or more access points in one or more external networks, such as service operator networks. The LMA may alternatively comprise a non-3GPP node capable of supporting the proxy mobile IP protocol. While the present description illustrates a UE that connects to an external network by use of a radio access network, it should be understood that this is not a limitation of the present invention, as the UE may be connected by use of any type of wired or wireless connection, including but not limited to an Ethernet connection, a cable TV connection, a fiber, a digital subscriber line (DSL) connection, a wireless local area network (WLAN), a Worldwide Interoperability for Microwave Access (WiMAX) connection, and the like.

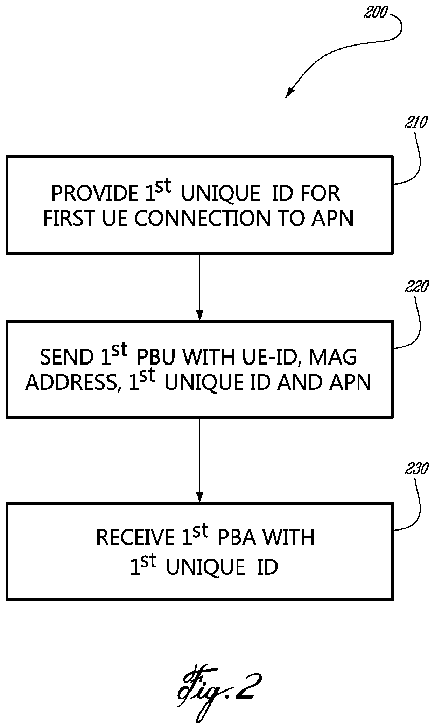

Reference is now made to the Drawings, in which Figure 2 shows an exemplary method implemented in a mobility access gateway, as per some teachings of the present invention. A sequence 200 starts at step 210 when the MAG provides a first UID for a first connection of a UE toward an access point identified by an APN. The MAG then sends, at step 220, a first PBU toward a LMA, the PBU comprising a UE identity, an address of the MAG, the first UID and the APN. At step 230, the MAG receives from the LMA a first PBA that comprises the first UID.

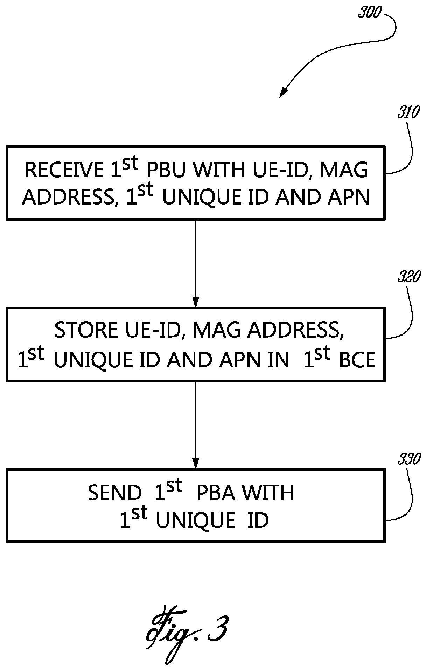

Figure 3 shows an exemplary method implemented in a local mobility anchor, as per some teachings of the present invention. A sequence 300 starts at step 310 when the LMA receives from a MAG a first PBU comprising a UE identity, an address of the MAG, a first UID and an APN. The LMA then creates, at step 320, a first BCE for storing the UE identity, the address of the MAG, the first UID and the APN. At step 330, the LMA responds to the MAG by sending a first PBA carrying the first UID.

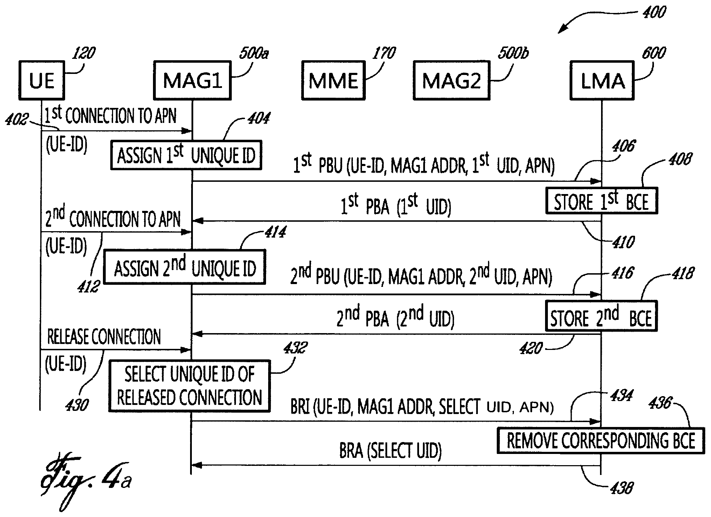

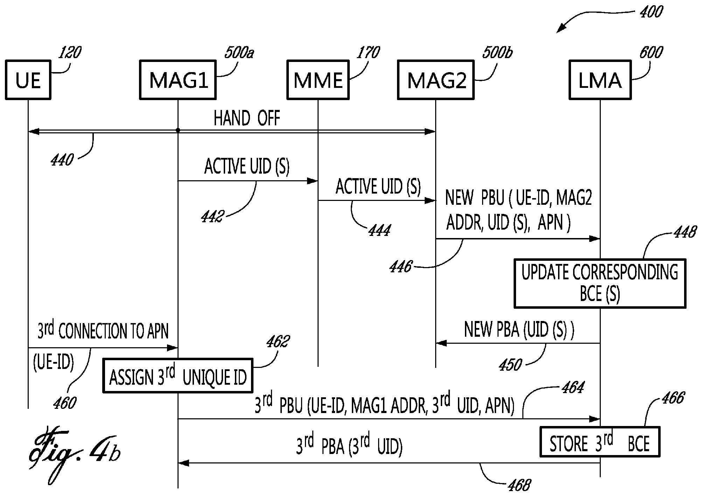

Figures 4a and 4b, collectively referred to a Figure 4, show a sequence diagram depicting exemplary steps of the method of the present invention. A sequence 400 takes place between a UE 120, a first MAG1 500a, a mobility management entity (MME) 170, a second MAG2 500b, and a LMA 600. The first and second MAGs both support the teachings of the present invention, but may otherwise differ as they may, for example, be part of different access networks. Elements shown on Figure 4 may be directly coupled or may be indirectly coupled and separated geographically. For example, the UE 120 and the MAGs may communicate through a RAN. Routers may or may not be present between the MAGs and the LMA 600 and transparently carry messages exchanged therebetween. Figure 4 thus shows a simplified network for ease of illustration of the steps of sequence 400.

The sequence 400 starts at step 402 when the UE 120 requests to make a first connection to an access point identified by an APN. The first connection request is received at the MAG1 500a. As in the case of other messages originated from the UE 120, the first connection request carries an identity of the UE 120. The MAG1 500a provides a first UID to the first connection at step 404. At step 406, the MAG1 500a sends a first PBU toward the LMA 600. The first PBU comprises the identity of the UE 120, an address of the MAG1, the first UID and the APN. Having received the first PBU, the LMA 600 stores a BCE for the first UE connection at step 408. The BCE comprises the UE identity, the address of the MAG1, the first UID and the APN. The LMA 600 then responds to the MAG1 500a at step 410 by sending a first PBA carrying the first UID.

In some embodiments, the first provided UID may take the form of an uplink generic routing encapsulation (GRE) key assigned to the connection. In other embodiments, the UID may be randomly generated. In some other embodiments, the UID is also called a packet data network connection identity. The UID may be globally unique, may alternatively be unique for a given UE identity, or may simply be unique for a given APN.

At step 412, the UE 120 makes a request for a second connection, using the same APN. The MAG1 500a allocates a second UID for this second connection, at step 414. The MAG1 500a then sends a second PBU to the LMA 600 at step 416, the second PBU comprising the UE identity, the address of the MAG1, the second UID and the APN. At step 418, the LMA 600 creates and stores a second BCE comprising the UE identity, the address of the MAG1, the second UID and the APN. The second BCE differs from the first BCE created at step 408 at least because it comprises a different UID. The LMA 600 responds to the MAG1 500a by sending a second PBA carrying the second UID at step 420.

The UE 120 releases one of the connections at step 430. The MAG1 500a determines which connection is being released and selects the corresponding UID at step 432. The MAG1 500a then sends a BRI to the LMA 600 at step 434, the BRI comprising the UE identity, the MAG1 address, the selected UID and the APN. The LMA 600 uses the selected UID to revoke (i.e. delete) the corresponding BCE at step 436. The LMA 600 responds to the MAG1 500a at step 438, by sending a BRA carrying the selected UID.

As the sequence of steps 430-438 is initiated, one or two or more connections may exist between the UE 120 and the access point identified by the APN. The sequence of steps 430-438 may thus comprise releasing one or more or all of those connections. In some embodiments, the BRI and BRA may carry more than one UIDs and the step 436 may comprise deleting more than one BCE at once. In other embodiments, steps 434, 436 and 438 may be repeated for each released connection.

At step 440, a handoff of a session for the UE 120 is taking place. Because of a change of location of the UE 120, the handoff involves the session no longer being served by the MAG1 500a and now being served by the MAG2 500b. The MAG1 500a sends a list of one or more active UIDs, for active connections of the UE 120 being handed over, towards the MAG2 500b at step 442. In some embodiments, the handoff may involve transferring less than all of the active connections of the UE 120, in which case the list of active UIDs is limited to those being actually handed over. The list of active UIDs may actually be sent from the MAG1 500a to the MME 170, which forwards the list to the MAG2 500b at step 444. In some embodiments, the list may be transferred directly between the two MAGs. As the MAG2 500b receives the list of active UIDs, it sends a new PBU to the LMA 600 at step 446. The new PBU comprises the UE identity, an address of the MAG2, the APN and at least one of the active UIDs. In some embodiments, the new PBU comprises a single active UID and several PBUs are sent from the MAG2 500b, for each active UID. In other embodiments, the new PBU carries the whole list of active UIDs being handed over. The LMA 600 receives the new PBU and updates at step 448 its binding cache by selecting the BCEs that corresponds to the received active UIDs comprised in the one or more PBUs. Updating each BCE comprises overwriting the address of the MAG1 with the address of the MAG2. The LMA 600 sends a new PBA to the MAG2 at step 500b. Of course, just like in the case of the new PBU, the new PBA may alternatively carry the whole list of active UIDs undergoing a handoff, or the new PBA may be sent multiple times until all active UIDs have been sent in a separate PBA. In embodiments where the new PBU and PBA each carry a single UID at a time, if more than one connection is undergoing handoff, steps 446-450 may be repeated in parallel or sequentially.

Step 460 occurs when the UE 120 initiates a third connection to the same APN. The UE 120 sends its connection request towards the MAG1 500a. As illustrated in Figure 4, step 460 may occur after one or more connections of the UE 120 have been handed over to the MAG2 500b and remain active thereat. The MAG1 500a assigns a third UID to the third connection of the UE 120 at step 462 and sends a third PBU comprising the UE identity, the MAG1 address, the third UID and the PAN at step 464. The LMA 600 receives the third PBU and stores a third BCE at step 466, the third BCE comprising the UE identity, the MAG1 address, the third UID and the APN. The LMA 600 acknowledges this third PBU with a third PBA carrying the third UID at step 468. It can be observed that the LMA 600 may at the same time have BCEs for UE 120 connections through both the MAG1 500a and the MAG2 500b.

Some of the steps of the sequence 400 may occur in various orders. For example, the sequence of steps 430-438 for releasing a connection, or the sequence of steps 440-450 for handing over a connection, may occur at any time after at least one connection has been set-up, steps 402-410. If a connection handoff from MAG1 500a to MAG2 500b has taken place, at steps 440-450, a connection release sequence as in steps 430-436 may involve the MAG2 500b instead of the MAG1 500a. In fact, the UE 120 may at the same time have active connections to the same APN through the MAG1 500a and through the MAG2 500b; this could be the case for example if the UE 120 supports more than one access technology corresponding to more than one MAG. Therefore, a BRI received at the LMA 600 may come from either of the MAG1 500a or the MAG2 500b. Regardless, because the BRI carries an address of the MAG having sent it, in addition to the UID, the LMA 600 is capable of identifying the proper BCE to be revoked.

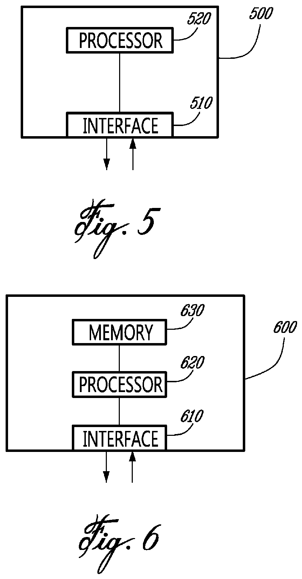

An exemplary construction of a MAG will now be described by reference to Figure 5, which shows an exemplary mobility access gateway according to an aspect of the present invention. A MAG 500 comprises an interface 510 and a processor 520. The processor 520 may be any commercially available, general purpose processor, or may be specifically designed for operation in the MAG 500. The processor 520 may be operable to execute processes related to the present invention in addition to numerous other processes. The interface 510 may be implemented as one single device or as distinct devices for receiving and sending signaling, messages and data. The MAG 500 is connected toward one or more RANs and toward one or more LMAs; means for connecting the MAG 500 toward other network elements may vary as, for example, connection toward one LMA might be on an Ethernet link while connection toward a RAN may be on an asynchronous transfer mode (ATM) link. Therefore the interface 510 may comprise a plurality of devices for connecting on a plurality of links of different types. Only one generic interface 510 is illustrated for ease of presentation of the present invention. The MAG 500 may further act as a gateway or a router and may thus comprise many more components, as is well-known in the art.

In operation, the MAG 500 serves a plurality of UEs connected to the MAG 500 through a RAN. The MAG 500 may be a 3GPP-compliant serving gateway and the RAN may be a 3GPP-compliant access network supporting the long term evolution (LTE) radio access technology. As such, the MAG 500 may be part of an evolved packet core (EPC) network as defined in by the 3GPP. The MAG 500 connects toward one or more LMAs that may also be part of the EPC. The MAG 500 may also be present in a non-3GPP network. The MAG 500 participates in setting up, for a UE, multiple packet data connections toward an access point having an APN. Messages arriving at the MAG 500 are received at the interface 510 and presented to the processor 520. When the MAG 500 is informed that the UE is requesting setting up a connection by use of the APN, the processor 520 assigns a UID to the connection of the UE toward the access point. The processor 520 requests the interface 510 to send toward the LMA a PBU comprising a UE identity, an address of the MAG 500, the UID and the APN. The processor 520 then receives from the LMA, through the interface 510, a PBA comprising the UID. The MAG 500 may receive one or more added connection requests from the same UE, indicating the same APN. For each such request, the processor 520 generates a distinct UID and requests the interface 510 to send toward the LMA a distinct PBU comprising the respective UID.

The MAG 500 may receive an indication that the UE intends to release a connection. The processor 520 requests the interface 510 to send to the LMA a BRI carrying the UID corresponding to the connection being released. The MAG 500 may also receive through the RAN an indication that the UE is undergoing a handoff towards a peer MAG. The processor 520 requests the interface 510 to send toward the peer MAG one or more UIDs corresponding to connections being handed over. In some embodiments, the interface 510 sends the UIDs to the peer MAG through a MME. The MAG 500 may also receive, from a peer MAG, one or more UIDs for UE connections being handed over to the MAG 500. The controller 520 requests the interface 510 to send the received UIDs toward the LMA in one or more PBUs.

Assigning the UID at the processor 520 may involve providing an uplink GRE key or using random generation. The UID may be globally unique or may simply be unique for a given APN.

In addition to the features described in relation to Figure 5, the MAG 500 may further be capable of performing the features of the various embodiments of the MAG presented in Figures 2 and 4.

An exemplary construction of a LMA will now be described by reference to Figure 6, which shows an exemplary local mobility anchor according to an aspect of the present invention. A LMA 600 comprises an interface 610, a processor 620 and a memory 630. The memory 630 may be a volatile memory, or may alternatively be a non- volatile memory, or persistent memory, that can be electrically erased and reprogrammed and that may be implemented, for example, as a flash memory or as a data storage module. The processor 620 may be any commercially available, general purpose processor, or may be specifically designed for operation in the LMA 600. The processor 620 may be operable to execute processes related to the present invention in addition to numerous other processes. The interface 610 may be implemented as one single device or as distinct devices for receiving and sending signaling, messages and data. The LMA 600 is connected toward a plurality of MAGs and external networks; means for connecting the LMA 600 toward other network elements may vary as, for example, connection toward one MAG might be on an Ethernet link while connection toward an external network might be on an asynchronous transfer mode (ATM) link. Therefore the interface 610 may comprise a plurality of devices for connecting on a plurality of links of different types. Only one generic interface 610 is illustrated for ease of presentation of the present invention. The LMA 600 may further act as a gateway or a router and may thus comprise many more components, as is well-known in the art.

In operation, the LMA 600 serves a plurality of UEs connected to the LMA 600 through one or more RANs and through one or more MAGs. The LMA 600 is connected to one or more external networks that provide services to the UEs. The LMA 600 connects at the external networks through access points having APNs. The LMA 600 may be a 3GPP-compliant packet data network gateway and the RAN may be a 3GPP-compliant access network supporting LTE. As such, the LMA 600 may be part of an EPC network. The LMA 600 may also be part of a non-3GPP network. The LMA 600 participates in setting up, for a UE, multiple packet data connections specifying a same APN. Messages arriving at the LMA 600 are received at the interface 610 and presented to the processor 620. The processor 620 receives from a MAG a PBU comprising an identity of the UE, an address of the MAG, the APN and a UID identifying a connection of the UE toward the access point. The processor 620 stores the UE identity, the address of the MAG, the APN and the UID in a BCE of the memory 630. The processor 620 then requests the interface 610 to send toward the MAG a PBA comprising the first unique identifier. The LMA 600 may then receive one or more additional PBUs for a same UE, each PBU carrying a distinct UID but indicating the same APN. For each received UID, the processor 620 stores a distinct BCE in the memory 630, each BCE being unique at least because the UIDs differ between distinct BCEs. Of course, each BCE further comprises the APN, the UE identity, and an address of the MAG having sent the BCE. In some embodiments, distinct BCEs stored for a given UE and for a same APN may comprise distinct MAG addresses. The LMA 600 may receive from a MAG a BRI for a UE connection that needs to be revoked. The BRI carries one or more UIDs. The processor 620 searches the memory 630 for finding the one or more BCEs having the received UIDs and deletes the found BCEs. The processor 620 then requests the interface 610 to send a binding revocation acknowledgement message to the MAG. The LMA 600 may also receive, for a given UE and APN, a PBU carrying a known UID, the PBU comprising a MAG address that does not correspond to a previous MAG address stored in a BCE having this known UID. This is indicative that a UE connection for the APN has undergone a handoff to a new MAG. The processor 620 searches through the memory 630 for a BCE comprising the known UID. The processor 620 updates the found BCE with the newly received MAG address and requests the interface 610 to send a PBA comprising the known UID, using the newly received MAG address as a destination address for the PBA.

In addition to the features described in relation to Figure 6, the LMA 600 may further be capable of performing the features of the various embodiments of the LMA presented in Figures 3 and 4.

Although several aspects of the preferred embodiment of the methods, of the MAG and of the LMA of the present invention have been illustrated in the accompanying Drawings and described in the foregoing Detailed Description, it will be understood that the invention is not limited to the embodiments disclosed, but is capable of numerous rearrangements, modifications and substitutions without departing from the teachings of the invention as set forth and defined by the following claims.

## Claims

1. A method for use in a mobility access gateway, MAG, (500a) of setting up, for a user equipment, UE, (120) multiple packet data connections toward an access point having an access point name, APN, the method comprising the steps of:
providing (404), at the MAG, a first unique identifier, UID, for identifying a first connection of the UE toward the access point;
sending (406), from the MAG toward a local mobility anchor, LMA (600), a first proxy-binding update, PBU, message comprising an identity of the UE, an address of the MAG, the first UID and the APN;
receiving (410), at the MAG from the LMA, a first proxy-binding acknowledgement, PBA, message comprising the first UID;
providing (414), at the MAG, a second UID for identifying a second connection of the UE toward the access point;
sending (416), from the MAG toward the LMA, a second PBU comprising the identity of the UE, the address of the MAG, the second UID and the APN;
receiving (420), at the MAG from the LMA, a second PBA comprising the second UID;
determining, at the MAG, that one of the first or second connection of the UE is to be revoked;
selecting (432), at the MAG, one of the first or second UID corresponding to the connection to be revoked;
sending (434), from the MAG toward the LMA, a binding revocation indication, BRI, message comprising the identity of the UE, the address of the MAG, the selected first or second UID and the APN; and
receiving (438), at the MAG from the LMA, a binding revocation acknowledgement, BRA, message carrying the selected first or second UID.

2. The method of claim 1, further comprising the steps of:
upon handoff (440) of the multiple packet data connections from the MAG toward a new MAG (500b), forwarding (442, 444) a list of one or more active UIDs from the MAG toward the new MAG;
sending (446), from the new MAG toward the LMA, a new PBU comprising the identity of the UE, an address of the new MAG, at least one of the active UIDs and the APN.

3. A method for use in local mobility anchor, LMA, (600) of setting up, for a user equipment, UE, (120), multiple packet data connections toward an access point having an access point name, APN, the method comprising the steps of:
receiving (406), at the LMA from a mobility access gateway, MAG (500a), a first proxy-binding update, PBU, message comprising an identity of the UE, an address of the MAG, the APN and a first unique identifier, UID, identifying a first connection of the UE toward the access point;
storing (408) the identity of the UE, the address of the MAG, the APN and the first UID in a first binding cache entry, BCE, of the LMA;
sending (410), from the LMA toward the MAG, a first proxy-binding acknowledgement, PBA, message comprising the first UID;
receiving (416), at the LMA from the same MAG or from another MAG (500b), a second PBU comprising the identity of the UE, an address of the MAG having sent the second PBU, the APN and a second UID identifying a second connection of the UE toward the access point;
storing (418) the identity of the UE, the address of the MAG having sent the second PBU, the APN and the second UID in a second BCE of the LMA;
sending (420), from the LMA toward the MAG having sent the second PBU, a second PBA comprising the second UID;
receiving (434), at the LMA from one of the MAGs, a binding revocation indication, BRI, message comprising the identity of the UE, the address of the MAG, one of the first and second UIDs and the APN;
removing (436), from the LMA, the BCE corresponding to the received one of the first and second UIDs; and
sending (438), to the MAG, a binding revocation acknowledgement, BRA, message carrying the received one of the first and second UIDs.

4. The method of claim 3, wherein:
the LMA is a packet data network gateway connected toward the access point; and
the MAG is a serving gateway connected toward the LMA and further connected toward the UE through a radio access network.

5. The method of claim 3, further comprising the steps of:
receiving (446), at the LMA from a new MAG (500b), a new PBU comprising the identity of the UE, an address of the new MAG, at least one of active UIDs and the APN; and
updating (448) the first BCE of the LMA with the address of the new MAG.

6. A computer-readable medium comprising code portions which, when executed on a processor (520, 620), configure the processor to perform all steps of a method according to any one of the preceding method claims.

7. A mobility access gateway, MAG, (500a) for setting up, for a user equipment, UE, (120), multiple packet data connections toward an access point having an access point name, APN, comprising:
an interface (510) configured to communicate with a local mobility anchor, LMA, (600); and
a processor (520) configured to control the interface and to:
- provide a first unique identifier, UID, for identifying a first connection of the UE toward the access point;
- request the interface to send, toward the LMA, a first proxy-binding update, PBU, message comprising an identity of the UE, an address of the MAG, the first UID and the APN;
- receive, from the LMA through the interface, a first proxy-binding acknowledgement, PBA, message comprising the first UID;
- provide, at the MAG, a second UID for identifying a second connection of the UE toward the access point;
- send, from the MAG toward the LMA, a second PBU comprising the identity of the UE, the address of the MAG, the second UID and the APN;
- receive, at the MAG from the LMA, a second PBA comprising the second UID;
- determine, at the MAG, that one of the first or second connection of the UE is to be revoked;
- select, at the MAG, one of the first or second UID corresponding to the connection to be revoked;
- send, from the MAG toward the LMA, a binding revocation indication, BRI, message comprising the identity of the UE, the address of the MAG, the selected first or second UID and the APN; and
- receive, from the LMA, a binding revocation acknowledgement, BRA, message carrying the selected first or second UID.

8. The MAG of claim 7, wherein:
the interface is further configured to communicate with the UE through a radio access network; and
the MAG is a serving gateway.

9. The MAG of claim 7, wherein:
the interface is further configured to communicate with a peer MAG; and
the processor is further configured to:
- receive from the peer MAG through the interface a second UID; and
- request the interface to send toward the LMA a new PBU comprising the identity of the UE, the address of the MAG, the second UID and the APN.

10. A local mobility anchor, LMA, (600) for setting up, for a user equipment, UE, (120) multiple packet data connections toward an access point having an access point name, APN, comprising:
a memory (630) configured to store binding cache entries, BCEs;
an interface (610) configured to communicate with one or more mobility access gateways, MAGs, (500a, 500b); and
a processor (620) configured to control the interface and to:
- receive, from a MAG through the interface, a first proxy-binding update, PBU, message comprising an identity of the UE, an address of the MAG, the APN and a first unique identifier, UID, identifying a first connection of the UE toward the access point;
- store the identity of the UE, the address of the MAG, the APN and the first UID in a first BCE;
- request the interface to send, toward the MAG, a first proxy-binding acknowledgement, PBA, message comprising the first UID;
- receive, at the LMA from the same MAG or from another MAG (500b), a second PBU comprising the identity of the UE, an address of the MAG having sent the second PBU, the APN and a second UID identifying a second connection of the UE toward the access point;
- store the identity of the UE, the address of the MAG having sent the second PBU, the APN and the second UID in a second BCE of the LMA;
- send, from the LMA toward the MAG having sent the second PBU, a second PBA comprising the second UID;
- receive, at the LMA from one of the MAGs, a binding revocation indication, BRI, message comprising the identity of the UE, one of the first and second UIDs, the address of the MAG and the APN;
- remove, from the LMA, the BCE corresponding to the received one of the first and second UIDs; and
- send, to the MAG, a binding revocation acknowledgement, BRA, message carrying the received one of the first and second UIDs.

11. The LMA of claim 10, wherein:
the interface is further configured to communicate with the access point; and
the LMA is a packet data network gateway.

## Patentansprüche

1. Verfahren zur Verwendung in einem Mobilitätszugangsgateway, MAG, (500a) zum Einrichten, für eine Benutzereinrichtung, UE, (120), von mehreren Paketdatenverbindungen hin zu einem Zugangspunkt mit einem Zugangspunktnamen, APN, wobei das Verfahren die Schritte umfasst:
Bereitstellen (404), bei dem MAG, einer ersten eindeutigen Kennung, UID, zum Identifizieren einer ersten Verbindung der UE hin zu dem Zugangspunkt;
Senden (406), von dem MAG hin zu einem lokalen Mobilitätsanker, LMA, (600), einer ersten Proxy-Bindungsaktualisierungs-, PBU-, Nachricht, die eine Identität der UE, eine Adresse des MAG, die erste UID und den APN umfasst;
Empfangen (410), bei dem MAG von dem LMA, einer ersten Proxy-Bindungszurkenntnisnahme-, PBA-, Nachricht, die die erste UID umfasst;
Bereitstellen (414), bei dem MAG, einer zweiten UID zum Identifizieren einer zweiten Verbindung der UE hin zu dem Zugangspunkt;
Senden (416), von dem MAG hin zu dem LMA, einer zweiten PBU, die die Identität der UE, die Adresse des MAG, die zweite UID und den APN umfasst;
Empfangen (420), bei dem MAG von dem LMA, einer zweiten PBA, die die zweite UID umfasst;
Bestimmen, bei dem MAG, dass eine der ersten oder zweiten Verbindung der UE abzubauen ist;
Auswählen (432), bei dem MAG, von einer der ersten oder zweiten UID, die der abzubauenden Verbindung entspricht;
Senden (434), von dem MAG hin zu dem LMA, einer Bindungsabbauangabe-, BRI-, Nachricht, die die Identität der UE, die Adresse des MAG, die ausgewählte erste oder zweite UID und den APN umfasst; und
Empfangen (438), bei dem MAG von dem LMA, einer Bindungsabbauzurkenntnisnahme-, BRA-, Nachricht, die die ausgewählte erste oder zweite UID mit sich führt.

2. Verfahren gemäß Anspruch 1, weiterhin umfassend die Schritte:
bei Übergabe (440) der mehreren Paketdatenverbindungen von dem MAG hin zu einem neuen MAG (500b), Weiterleiten (442, 444) einer Liste von einer oder mehreren aktiven UIDs von dem MAG hin zu dem neuen MAG;
Senden (446), von dem neuen MAG hin zu dem LMA, einer neuen PBU, die die Identität der UE, eine Adresse des neuen MAG, zumindest eine der aktiven UIDs und den APN umfasst.

3. Verfahren zur Verwendung in einem lokalen Mobilitätsanker, LMA, (600) zum Aufbauen, für eine Benutzereinrichtung, UE, (120), von mehreren Paketdatenverbindungen hin zu einem Zugangspunkt mit einem Zugangspunktnamen, APN, wobei das Verfahren die Schritte umfasst:
Empfangen (406), bei dem LMA von einem Mobilitätszugangsgateway, MAG, (500a), einer ersten Proxy-Bindungsaktualisierungs-, PBU-, Nachricht, die eine Identität der UE, eine Adresse des MAG, den APN und eine erste eindeutige Kennung, UID, umfasst, die eine erste Verbindung der UE hin zu dem Zugangspunkt identifiziert;
Speichern (408) der Identität der UE, der Adresse des MAG, des APN und der ersten UID in einem ersten Bindungscacheeintrag, BCE, des LMA;
Senden (410), von dem LMA hin zu dem MAG, einer ersten Proxy-Bindungszurkenntnisnahme-, PBA-, Nachricht, die die erste UID umfasst;
Empfangen (416), bei dem LMA von demselben MAG oder von einem weiteren MAG (500b), einer zweiten PBU, die die Identität der UE, eine Adresse des MAG, der die zweite PBU sendete, den APN und eine zweite UID, die eine zweite Verbindung der UE hin zu dem Zugangspunkt identifiziert, umfasst;
Speichern (418) der Identität der UE, der Adresse des MAG, der die zweite PBU sendete, des APN und der zweiten UID in einem zweiten BCE des LMA;
Senden (420), von dem LMA hin zu dem MAG, der die zweite PBU sendete, einer zweiten PBA, die die zweite UID umfasst;
Empfangen (434), bei dem LMA von einem der MAGs, einer Bindungsabbauangabe-, BRI-, Nachricht, die die Identität der UE, die Adresse des MAG, eine der ersten und zweiten UIDs und den APN umfasst;
Entfernen (436), von dem LMA, des BCE, der der empfangenen der ersten und zweiten UIDs entspricht; und
Senden (438), zu dem MAG, einer Bindungsabbauzurkenntnisnahme-, BRA-, Nachricht, die die empfangene der ersten und zweiten UIDs mit sich führt.

4. Verfahren gemäß Anspruch 3, wobei:
der LMA ein Paketdatennetzwerkgateway ist, der mit dem Zugangspunkt verbunden ist; und
der MAG ein bedienender Gateway ist, der mit dem LMA verbunden ist und weiterhin hin zu der UE durch ein Funkzugangsnetzwerk verbunden ist.

5. Verfahren gemäß Anspruch 3, weiterhin umfassend die Schritte:
Empfangen (446), bei dem LMA von einem neuen MAG (500b), einer neuen PBU, die die Identität der UE, eine Adresse des neuen MAG, zumindest eine aktive der UIDs und den APN umfasst; und
Aktualisieren (448) des ersten BCE des LMA mit der Adresse des neuen MAG.

6. Computerlesbares Medium, das Codeabschnitte umfasst, die bei Ausführung auf einem Prozessor (520, 620) den Prozessor konfigurieren, um alle Schritte eines Verfahrens gemäß einem der vorangegangenen Verfahrensansprüche durchzuführen.

7. Mobilitätszugangsgateway, MAG, (500a) zum Aufbauen, für eine Benutzereinrichtung, UE, (120), von mehreren Paketdatenverbindungen hin zu einem Zugangspunkt mit einem Zugangspunktnamen, APN, umfassend:
eine Schnittstelle (510), die konfiguriert ist, um mit einem lokalen Mobilitätsanker, LMA, (600) zu kommunizieren; und
einen Prozessor (520), der dazu konfiguriert ist, um die Schnittstelle zu steuern, und um:
- eine erste eindeutige Kennung, UID, zum Identifizieren einer ersten Verbindung der UE hin zu dem Zugangspunkt bereitzustellen;
- die Schnittstelle aufzufordern, um zu dem LMA eine erste Proxy-Bindungsvoraussetzung-, PBU-, Nachricht zu senden, die eine Identität der UE, eine Adresse des MAG, die erste UID und den APN umfasst;
- von dem LMA durch die Schnittstelle, eine erste Proxy-Bindungszurkenntnisnahme-, PBA-, Nachricht zu empfangen, die die erste UID umfasst;
- bei dem MAG eine zweite UID zum Identifizieren einer zweiten Verbindung der UE hin zu dem Zugangspunkt bereitzustellen;
- von dem MAG hin zu dem LMA eine zweite PBU zu senden, die die Identität der UE, die Adresse des MAG, die zweite UID und den APN umfasst;
- bei dem MAG von dem LMA eine zweite PBA zu empfangen, die die zweite UID umfasst;
- bei dem MAG zu bestimmen, dass eine der ersten oder zweiten Verbindung der UE abzubauen ist;
- bei dem MAG eine der ersten oder zweiten UID auszuwählen, die der abzubauenden Verbindung entspricht;
- von dem MAG hin zu dem LMA eine Bindungsabbauangabe-, BRI-, Nachricht zu senden, die die Identität der UE, die Adresse des MAG, die ausgewählte erste oder zweite UID und den APN umfasst; und
- von dem LMA eine Bindungsabbauzurkenntnisnahme-, BRA-, Nachricht zu empfangen, die die ausgewählte erste oder zweite UID mit sich führt.

8. MAG gemäß Anspruch 7, wobei:
die Schnittstelle weiterhin konfiguriert ist, um mit der UE durch ein Funkzugangsnetzwerk zu kommunizieren; und
der MAG ein bedienender Gateway ist.

9. MAG gemäß Anspruch 7, wobei:
die Schnittstelle weiterhin konfiguriert ist, um mit einem Peer-MAG zu kommunizieren; und
der Prozessor weiterhin konfiguriert ist, um:
- von dem Peer-MAG über die Schnittstelle eine zweite UID zu empfangen; und
- die Schnittstelle aufzufordern, hin zu dem LMA eine neue PBU zu senden, die die Identität der UE, die Adresse des MAG, die zweite UID und den APN umfasst.

10. Lokaler Mobilitätsanker, LMA, (600) zum Aufbauen, für eine Benutzereinrichtung, UE, (120), von mehreren Paketdatenverbindungen hin zu einem Zugangspunkt mit einem Zugangspunktnamen, APN, umfassend:
einen Speicher (630), der konfiguriert ist, um Bindungscacheeinträge, BCEs, zu speichern;
eine Schnittstelle (610), die konfiguriert ist, um mit einem oder mehreren Mobilitätszugangsgateways, MAGs, (500a, 500b) zu kommunizieren; und
einen Prozessor (620), der konfiguriert ist, um die Schnittstelle zu steuern, und um:
- von einem MAG durch die Schnittstelle, eine erste Proxy-Bindungsaktualisierungs-, PBU-, Nachricht zu empfangen, die eine Identität der UE, eine Adresse des MAG, den APN und eine erste eindeutige Kennung, UID, umfasst, die eine erste Verbindung der UE hin zu dem Zugangspunkt identifiziert;
- die Identität der UE, die Adresse des MAG, den APN und die erste UID in einem ersten BCE zu speichern;
- die Schnittstelle aufzufordern, um hin zu dem MAG eine erste Proxy-Bindungszurkenntnisnahme-, PBA-, Nachricht zu senden, die die erste UID umfasst;
- bei dem LMA von demselben MAG oder einem weiteren MAG (500b) eine zweite PBU zu empfangen, die die Identität der UE, eine Adresse des MAG, der die zweite PBU sendete, den APN und eine zweite UID umfasst, die eine zweite Verbindung der UE hin zu dem Zugangspunkt identifizierte;
- die Identität der UE, die Adresse des MAG, der die zweite PBU sendete, den APN und die zweite UID in einem zweiten BCE des LMA zu speichern;
- von dem LMA hin zu dem MAG, der die zweite PBU sendete, eine zweite PBA zu senden, die zweite UID umfasst;
- bei dem LMA von einem der MAGs eine Bindungsabbauangabe-, BRI-, Nachricht zu empfangen, die die Identität der UE, eine der ersten und zweiten UIDs, die Adresse des MAG und den APN umfasst;
- aus dem LMA den BCE zu entfernen, der der empfangenen der ersten und zweiten UIDs entspricht; und
- zu dem MAG eine Bindungsabbauzurkenntnisnahme-, BRA-, Nachricht zu senden, die die empfangene der ersten und zweiten UIDs mit sich führt.

11. LMA gemäß Anspruch 10, wobei:
die Schnittstelle weiterhin konfiguriert ist, um mit dem Zugangspunkt zu kommunizieren; und
der LMA ein Paketdatennetzwerkgateway ist.

## Revendications

1. Procédé à utiliser dans une passerelle d'accès de mobilité, MAG (500a), pour établir, pour un équipement d'utilisateur UE (120), des connexions à paquets de données multiples vers un point d'accès ayant un nom de point d'accès, APN, le procédé comprenant les étapes consistant à :
fournir (404), au niveau de la MAG, un premier identifiant unique, UID, pour identifier une première connexion de l'UE vers le point d'accès ;
envoyer (406), à partir du MAG vers une ancre de mobilité locale, LMA (600), un premier message de mise à jour d'association de serveur mandataire, PBU, comprenant une identité de l'UE, une adresse de la MAG, le premier UID et l'APN ;
recevoir (410), au niveau de la MAG depuis la LMA, un premier message d'accusé de réception d'association de serveur mandataire, PBA, comprenant le premier UID ;
fournir (414), au niveau de la MAG, un second UID pour identifier une seconde connexion de l'UE vers le point d'accès ;
envoyer (416), à partir de la MAG vers le LMA, un second PBU comprenant l'identité de l'UE, l'adresse de la MAG, le second UID et le APN ;
recevoir (420), au niveau de la MAG depuis le LMA, un second PBA comprenant le second UID ;
déterminer, au niveau de la MAG, qu'une de la première ou seconde connexion de l'UE doit être révoquée ;
sélectionner (432), au niveau de la MAG, un du premier ou second UID correspondant à la connexion à révoquer ;
envoyer (434), de la MAG vers la LMA, un message d'indication de révocation d'association, BRI, comprenant l'identité de l'UE, l'adresse de la MAG, le premier ou second UID sélectionné et l'APN ; et
recevoir (438), au niveau de la MAG depuis la LMA, un message d'accusé de réception de révocation d'association, BRA, transportant le premier ou second UID sélectionné.

2. Procédé selon la revendication 1, comprenant en outre les étapes consistant à :
lors d'un transfert (440) des connexions de paquets de données multiples de la MAG vers une nouvelle MAG (500b), acheminer (442,444) une liste d'un ou plusieurs UIDs actifs de la MAG vers la nouvelle MAG ;
envoyer (446), de la nouvelle MAG vers la LMA, une nouvelle PBU comprenant l'identité de l'UE, une adresse de la nouvelle MAG, au moins un des UIDs actifs et l'APN.

3. Procédé à utiliser dans une ancre de mobilité locale, LMA (600), pour établir, pour un équipement d'utilisateur UE (120), des connexions à paquets de données multiples vers un point d'accès ayant un nom de point d'accès, APN, le procédé comprenant les étapes consistant à :
recevoir (406), au niveau de la LMA depuis une passerelle d'accès de mobilité, MAG (500a), un premier message de mise à jour d'association de serveur mandataire, PBU, comprenant une identité de l'UE, une adresse de la MAG, l'APN et un premier identifiant unique, UID, identifiant une première connexion de l'UE vers le point d'accès ;
mémoriser (408) l'identité de l'UE, l'adresse de la MAG, l'APN et le premier UID dans une première entrée de mémoire cache d'association, BCE, de la LMA ;
envoyer (410), de la LMA vers la MAG, un premier message d'accusé de réception d'association de serveur mandataire, PBA, comprenant le premier UID ;
recevoir (416), au niveau du LMA depuis la même MAG ou une autre MAG (500b), un second PBU comprenant l'identité de l'UE, une adresse de la MAG ayant envoyé le second PBU, l'APN et un second UID identifiant une seconde connexion de l'UE vers le point d'accès ;
mémoriser (418) l'identité de l'UE, l'adresse de la MAG ayant envoyé le second PBU, l'APN et le second UID dans un second BCE de la LMA ;
envoyer (420), de la LMA vers la MAG ayant envoyé le second PBU, un second PBA comprenant le second UID ;
recevoir (434), au niveau de la LMA depuis une des MAGs, un message d'indication de révocation d'association, BRI, comprenant l'identité de l'UE, l'adresse de la MAG, un du premier et second UIDs et l'APN ;
supprimer (436), de la LMA, le BCE correspondant à l'UID reçu du premier ou second UIDs ; et
envoyer (438), vers la MAG, un message d'accusé de réception de révocation d'association, BRA, transportant l'UID reçu du premier ou second UIDs.

4. Procédé selon la revendication 3, dans lequel :
la LMA est une passerelle de réseau de paquets de données connectée vers le point d'accès ; et
la MAG est une passerelle de desserte connectée vers la LMA et connectée en outre vers l'UE par l'intermédiaire d'un réseau d'accès radio.

5. Procédé selon la revendication 3, comprenant en outre les étapes consistant à :
recevoir (446), au niveau de la LMA depuis une nouvelle MAG (500b), un nouveau PBU comprenant l'identité de l'UE, une adresse de la nouvelle MAG, au moins un des UIDs actifs et l'APN ; et
mettre à jour (448) le premier BCE de la LMA avec l'adresse de la nouvelle MAG.

6. Support lisible par ordinateur comprenant des portions de code qui, lorsqu'elles sont exécutées sur un processeur (520, 620), configurent le processeur afin d'effectuer toutes les étapes d'un procédé selon une quelconque des revendications de procédé précédentes.

7. Passerelle d'accès de mobilité, MAG (500a), pour établir, pour un équipement d'utilisateur, UE (120), des connexions à paquets de données multiples vers un point d'accès ayant un nom de point d'accès, APN, comprenant :
une interface (510) configurée pour communiquer avec une ancre de mobilité locale, LMA (600) ; et
un processeur (520) configuré pour commander l'interface et pour :
- fournir un premier identifiant unique, UID, pour identifier une première connexion de l'UE vers le point d'accès ;
- demander à l'interface d'envoyer, vers la LMA, un premier message d'association de serveur mandataire, PBU, comprenant une identité de l'UE, une adresse de la MAG, le premier UID et l'APN ;
- recevoir, depuis la LMA par l'intermédiaire de l'interface, un premier message d'accusé de réception d'association de serveur mandataire, PBA, comprenant le premier UID ;
- fournir, au niveau de la MAG, un second UID pour identifier une seconde connexion de l'UE vers le point d'accès ;
- envoyer, de la MAG vers la LMA, un second PBU comprenant l'identité de l'UE, l'adresse de la MAG, le second UID et l'APN ;
- recevoir, au niveau de la MAG depuis la LMA, un second PBA comprenant le second UID ;
- déterminer, au niveau de la MAG, qu'une de la première ou seconde connexion de l'UE doit être révoquée ;
- sélectionner, au niveau de la MAG, un du premier ou second UID correspondant à la connexion à révoquer ;
- envoyer, de la MAG vers la LMA, un message d'indication de révocation d'association, BRI, comprenant l'identité de l'UE, l'adresse de la MAG, le premier ou second UID sélectionné et l'APN ; et
- recevoir, de la LMA, un message d'accusé de réception de révocation d'association, BRA, transportant le premier ou second UID sélectionné.

8. MAG selon la revendication 7, dans laquelle :
l'interface est en outre configurée pour communiquer avec l'UE par l'intermédiaire d'un réseau d'accès radio ; et
la MAG est une passerelle de desserte.

9. MAG selon la revendication 7, dans laquelle :
l'interface est en outre configurée pour communiquer avec une MAG paire ; et
le processeur est en outre configuré pour :
- recevoir de la MAG paire par l'intermédiaire de l'interface un second UID ; et
- demander à l'interface d'envoyer vers la LMA un nouveau PBU comprenant l'identité de l'UE, l'adresse de la MAG, le second UID et l'APN.

10. Ancre de mobilité locale, LMA (600), pour établir, pour un équipement d'utilisateur, UE (120), des connexions à paquets de données multiples vers un point d'accès ayant un nom de point d'accès, APN, comprenant :
une mémoire (630) configurée pour mémoriser des entrées de mémoire cache d'association, BCEs ;
une interface (610) configurée pour communiquer avec une ou des passerelles d'accès de mobilité, MAGs (500a, 500b) ; et
un processeur (620) configuré pour commander l'interface et pour :
- recevoir, depuis la MAG par l'intermédiaire de l'interface, un message de mise à jour d'association de serveur mandataire, PBU, comprenant une identité de l'UE, une adresse de la MAG, l'APN et un premier identifiant unique, UID, identifiant une première connexion de l'UE vers le point d'accès ;
- mémoriser l'identité de l'UE, l'adresse de la MAG, l'APN et le premier UID dans un premier BCE ;
- demander à l'interface d'envoyer, vers la MAG, un premier message d'accusé de réception d'association de serveur mandataire, PBA, comprenant le premier UID ;
- recevoir, au niveau du LMA depuis la même MAG ou d'une autre MAG (500b), un second PBU comprenant l'identité de l'UE, une adresse de la MAG ayant envoyé le second PBU, l'APN et un second UID identifiant une seconde connexion de l'UE vers le point d'accès ;
- mémoriser l'identité de l'UE, l'adresse de la MAG ayant envoyé le second PBU, l'APN et le second UID dans un second BCE de la LMA ;
- envoyer, depuis la LMA vers la MAG ayant envoyé le second PBU, un second PBA comprenant le second UID ;
- recevoir, au niveau de la LMA depuis une des MAGs, un message d'indication de révocation d'association, BRI, comprenant l'identité de l'UE, un du premier et second UIDs, l'adresse de la MAG et l'APN ;
- supprimer, de la LMA, le BCE correspondant à l'UID reçu du premier ou second UID ; et
- envoyer, à la MAG, un message d'accusé de réception de révocation d'association, BRA, transportant l'UID reçu du premier ou second UID.

11. LMA selon la revendication 10, dans laquelle :
l'interface est en outre configurée pour communiquer avec le point d'accès ; et
la LMA est une passerelle de réseau de paquets de données.
